# EUROPÄISCHE PATENTSCHRIFT

(11) **EP 0 582 168 B1**
(45) Veröffentlichungstag und Bekanntmachung des Hinweises auf die Patenterteilung: **14.06.1995**
(21) Anmeldenummer: 93111918.4
(22) Anmeldetag: 26.07.1993
(51) Int. Cl.: C09K 21/12, C09K 21/04

(54) **Verwendung von Intumeszenzträgern für Brandschutzgläser**
Use of intumescent carriers in fire-proof glasses
Utilisation de porteurs intumescents dans les verres ignifuges

(30) Priorität: 06.08.1992 DE 4226044
(43) Veröffentlichungstag der Anmeldung: 09.02.1994
(73) Patentinhaber: BAYER AG, 51368 Leverkusen (DE); Schott Glaswerke, 55122 Mainz (DE)
(72) Erfinder: von Bonin, Wulf, Dr., D-51519 Odenthal (DE); Leroux Roland, Dr., D-55271 Stadecken-Elsheim (DE); Karschti, Thomas M., D-55257 Budenheim (DE)

(56) Entgegenhaltungen:
- EP-A- 0 389 768
- EP-A- 0 468 259
- EP-A- 0 527 401
- US-A- 4 182 681
- US-A- 4 288 491
- US-A- 5 156 775
- DATABASE WPI Section Ch, Week 9209, Derwent Publications Ltd., London, GB; Class A28, AN 92-069928 & JP-A-4 015 218 (YOKOHAMA RUBBER KK) 20. Januar 1992

## Beschreibung

Die vorliegende Erfindung betrifft die Verwendung von verbesserten, in wäßrigen Systemen applizierbaren Intumeszenzträgern auf der Basis von Aluminium-Phosphat-Aminsalzen für Brandschutzgläser.

Intumeszenzträger auf Basis von Aluminium-Phosphat-Salzen sind bereits bekannt und z.B. in der DE-OS 4 023 310 beschrieben. Solche Intumeszenzträger haben zum Teil ausgezeichnete Intumeszenzwirkungen, es ist aber in vielen Fällen von Vorteil, Intumeszenzträger mit noch weiter gesteigerter Intumeszenzwirkung zur Verfügung zu haben.

Unter Intumeszenz versteht man die Fähigkeit eines Materials bei Beflammung oder beim Erhitzen auf hohe Temperaturen aufzuschäumen, d.h. zu intumeszieren.

Es wurde nun die Verwendung von Intumeszenzträgern auf der Basis von Aluminium-Phosphat-Salzen für Brandschutzgläser gefunden, die dadurch gekennzeichnet ist, daß es sich bei den Intumeszenzträgern um Umsetzungsprodukte handelt aus
1 Mol einer Aluminiumverbindung mit
2 bis 5 Molen einer Phosphor enthaltenden Säure,
2 bis 9 Molen einer Bor enthaltenden Säure und
2 bis 9 Molen eines Alkanolamins,
die gegebenenfalls bis zu 36 Mol Wasser pro Mol eingesetzter Aluminiumverbindung enthalten.

Als Aluminiumverbindungen kommen z.B. solche in Betracht, die durch Umsetzung mit einer Phosphorsäure Aluminiumphosphate ergeben können, z.B. Aluminiumoxide, -oxidhydrate, -hydroxide und -carbonate. Bevorzugt ist Aluminiumhydroxid Al(OH)₃, gegebenenfalls Kristallwasser enthaltend.

Als Phosphor enthaltende Säuren kommen z.B. Ortho-, Meta-, Pyro- und Polyphosphorsäuren, sowie Phosphon- und Phosphinsäuren in Betracht. Bevorzugt ist Orthophosphorsäure H₃PO₄. Bezogen auf 1 Atom-Äquivalent Aluminium in der Aluminiumverbindung werden bevorzugt 2,5 bis 3,5, besonders bevorzugt 2,9 bis 3,1 Mol Phosphor enthaltender Säure eingesetzt.

Als Bor enthaltende Säuren kommen z.B. Orthoborsäure und sonstige Borsäuren oder Borverbindungen in Betracht, die unter dem Einfluß von Wasser in Orthoborsäure übergehen können, z.B. Boroxide. Bevorzugt ist Orthoborsäure H₃BO₃. Bezogen auf 1 Atom-Äquivalent Aluminium in der Aluminiumverbindung werden bevorzugt 3 bis 7, insbesondere 4 bis 6 Mole Bor enthaltende Säure oder ein Vorläufer davon eingesetzt.

Als Alkanolamine kommen z.B. Umsetzungsprodukte von Ammoniak oder Aminen mit Alkylenoxiden in Betracht. Neben Ammoniak seien als Amine beispielsweise genannt Hydrazin, Hydroxylamin, gegebenenfalls cyclische aliphatische, aromatische und heterocyclische Amine und Polyamine mit bis zu 7 N-Atomen und bis zu 20 C-Atomen wie Ethylendiamin, Propylendiamin, Piperazin und Morpholin. Als Alkylenoxide seien beispielsweise genannt Ethylenoxid, Propylenoxid und deren Gemische. Auch Polyethergruppen enthaltende Alkanolamine und Polyalkanolamine (wie Diethanolamin, Triethanolamin und z.B. 1- bis 4-fach alkoxylierte Diamine, wie Diethanolethylendiamin) kommen in Frage. Bevorzugt ist Monoethanolamin. Bezogen auf 1 Atom-Äquivalent Aluminium in der Aluminiumverbindung werden bevorzugt 3 bis 7 Mole Alkanolamin eingesetzt. Besonders bevorzugt werden die Bor enthaltende Säure und das Alkanolamin in gleicher molarer Menge eingesetzt.

Der Wassergehalt erfindungsgemäß zu verwendender Intumeszenzträger kann in weiten Grenzen schwanken (0 bis 36 Mol pro Mol eingesetzter Aluminiumverbindung), wobei nicht unterschieden wird zwischen Lösungswasser, Kristallwasser und durch Kondensationsreaktionen frei gewordenes Wasser. Der Wassergehalt wird im wesentlichen von den bei der Herstellung und Trocknung angewendeten Temperaturen beeinflußt.

Die Herstellung erfindungsgemäß zu verwendender Intumeszenzträger kann durch Mischung der Komponenten in Gegenwart von vorzugsweise möglichst wenig Wasser erfolgen, z.B. durch Verkneten bei 50 bis 120°C, wobei es zweckmäßig ist, möglichst feinteilige Aluminiumverbindungen einzusetzen.

Oft ist es technisch vorteilhaft, direkt eine z.B. 50 bis 80 gew.-%ige wäßrige Lösung der erfindungsgemäßen Intumeszenzträger herzustellen, indem man z.B. die Komponenten in einer entsprechenden Menge Wasser in einem Rührgefäß bei 25 bis 110°C zur Umsetzung bringt.

Es hat sich als vorteilhaft erwiesen, zunächst durch Umsetzung der Aluminiumverbindung mit der Phosphor enthaltenden Säure in Wasser eine z.B. 65 bis 75 gew.-%ige Aluminiumphosphatlösung herzustellen, dann diese mit Alkanolamin und schließlich mit der Bor enthaltenden Säure zu versetzen oder das Aluminiumphosphat in 65 bis 75 gew.-%iger Lösung mit einer 50 bis 75 gew.-%igen Lösung eines Umsetzungsproduktes einer Bor enthaltenden Säure und eines Alkanolamins zur Umsetzung zu bringen. Diese Umsetzung ist exotherm. Die so hergestellten Intumeszenzträger können in wäßrigem Medium als klare Lösung oder als Dispersion vorliegen. Soweit hier Lösungen angesprochen sind, ist das Lösungsmittel im allgemeinen Wasser.

Die Intumeszenzfähigkeit der erfindungsgemäß zu verwendenden Intumeszenzträger ist abhängig vom Molverhältnis Aluminiumverbindung + Phosphor enthaltender Säure einerseits zu Bor enthaltender Säure + Alkanolamin andererseits. Aus der Aluminiumverbindung und der Phosphor enthaltenden Säure bildet sich formal ein saures Aluminiumphosphat (z.B. Al(H₂PO₄)₃), aus der Bor enthaltenden Säure und Alkanolamin formal ein Borsäure-Alkanolamin-Komplex (z.B. H₃BO₃ x H₂N-CH₂-CH₂-OH). Beispielsweise ist bei einem molaren Verhältnis von Al(H₂PO₄)₃ zu (H₃BO₃ x H₂N-CH₂-CH₂-OH) oder entsprechenden anderen Aluminiumphosphaten zu Borsäure-Alkanolaminkomplexen von 1:1 die Intumeszenz geringer als wenn dieses Molverhältnis, wie es besonders bevorzugt ist, bei 1:3,5 bis 1:6 liegt. Nimmt dieses Molverhältnis weiter ab, z.B. unter 1:7,5, so sinkt die Intumeszenz wieder ab.

Das bedeutet, daß man bei gegebenen Ausgangsmaterialien die Intumeszenzeigenschaften durch die entsprechende Wahl der Mengen an Ausgangsmaterialien weitgehend beliebig steuern kann.

Im Rahmen der vorliegenden Erfindung kann gegebenenfalls ein Teil der zum Einsatz gelangenden Alkanolamine durch Ammoniak, Ethylendiamin oder andere flüchtige Amine ersetzt werden, wobei jedoch vorzugsweise nicht mehr als 50 Mol-% der Alkanolamine substituiert werden. Durch den Einsatz von Ammoniak wird der organische Anteil im Intumeszenzträger weiter vermindert.

Weitere bevorzugte erfindungsgemäß zu verwendende Intumeszenzträger sind
- Umsetzungsprodukte von einem Mol Aluminiumhydroxid mit 3 Molen Orthophosphorsäure, 3 bis 7 Molen Monoethanolamin und 3 bis 7 Molen Orthoborsäure,
- solche Umsetzungsprodukte im Gemisch mit 20 bis 70 Gew.-% Wasser (bezogen auf die Mischung) und
- solche Umsetzungsprodukte, die bei bis zu 150°C, vorzugsweise zwischen 10 und 120°C getrocknet wurden (bei Normaldruck).

Erfindungsgemäß zu verwendende Intumeszenzträger können z.B. den Schutz von Fenstern und Scheibenverbunden gegen den Durchtritt von Flammen, Hitze und Brandgasen bewirken.

Durch Erhitzung der erfindungsgemäß zu verwendenden Intumeszenzträger werden weitgehend anorganische Intumeszenzschäume erhalten, die in vielen Fällen bis zu Temperaturen über 1200°C stabil sind, der oxidativen Abtragung nicht unterliegen, vielfach feinporig sind und hervorragende thermische Isolierstoffe ergeben, wobei das Aufschäumen mit der Erzeugung nur geringer Mengen von Rauchgasen verbunden ist.

Erfindungsgemäß zu verwendende Intumeszenzträger, auch in Form ihrer Zubereitungen in wäßrigen oder sonstigen Verteilungsmedien (hierunter sind auch Kunststoffmatrices, Polymere und Polymerdispersionen zu verstehen) sind ausgezeichnete Bindemittel mit intumeszentem und Brandschutzcharakter.

Insbesondere erfindungsgemäß zu verwendende Intumeszenzträger in Form ihrer wäßrigen Lösungen, die gegebenenfalls noch gelbildende Zusatzstoffe enthalten können (etwa hochmolekulare und/oder vernetzte Polyacrylamide, Poly(Meth)-Acrylsäuren und/oder Polyvinylalkohol), sind zur Herstellung von Füllungen oder Beschichtungen bei Verbundglaskonstruktionen, z.B. für den Einsatz als Brandschutzfenster, geeignet.

Die wäßrigen Lösungen der erfindungsgemäß zu verwendenden Intumeszenzträger weisen im allgemeinen pH-Werte auf zwischen 4 und 8, insbesondere zwischen 6 und 7. Das ist überraschend, da ihre molare Zusammensetzung erhebliche Überschüsse an Säureäquivalenten über Basenäquivalenten aufweist. Aufgrund des günstigen pH-Wertes sind sie mit Gläsern gut verträglich und deshalb gut kombinierbar.

Wäßrige Kombinationen erfindungsgemäß zu verwendender Intumeszenzträger mit Gelbildnern, wie sie für Feuerschutzverglasungen verwendet werden können, können, bezogen auf die festen Anteile des Gels, z.B. 10 bis 98, vorzugsweise 50 bis 90 Gew.-% erfindungsgemäß zu verwendender Intumeszenzträger enthalten. Ergänzend auf 100 Gew.-% feste Bestandteile können gelbildende und gegebenenfalls weitere Zusatzstoffe enthalten sein. Der Gesamtfeststoffgehalt solcher Gele kann z.B. zwischen 10 und 95, vorzugsweise zwischen 45 und 70 Gew.-% liegen.

Es kann auch vorteilhaft sein, erfindungsgemäß zu vorwendende Intumeszenzträger als Feststoff oder wäßrige Lösung ohne weitere Zusätze oder mit geringen Mengen an Zusätzen und Hilfsmitteln, z.B. bis zu 10 Gew.-%, vorzugsweise bis zu 5 Gew.-% einzusetzen, beispielsweise für die Beschichtung von Fensterflächen.

Eine bevorzugte Verwendung erfindungsgemäß zu verwendender Intumeszenzträger ist die Herstellung wäßriger Gele durch Mischung mit gelbildenden Zusätzen und Wasser, die als Füllung oder Beschichtung von Verbundglaskonstruktionen für Brandschutzzwecke geeignet sind.

Beim Auffinden der erfindungsgemäß zu verwendenden Intumeszenzträger war es nicht nur überraschend, daß mit relativ geringen molaren Mengen an Alkanolaminen wäßrige Lösungen von pH-Werten zwischen 6 und 7 erhältlich sind, sondern auch, daß innerhalb des Systems Aluminiumphosphat-Borsäure mit relativ geringen Mengen an Alkanolaminen klare und stabile Lösungen erhalten werden können. Es war fernerhin überraschend, daß in dem für Fensterfüllungen erprobten wäßrigen Gelsystem Al(H₂PO₄)₃/Polyacrylamid, das bei 80°C schon nach wenigen Stunden zu Trübungen und Phasentrennungen neigt, dann Stabilitäten von über 120 Stunden bei 80°C erreicht werden, wenn man in Molverhältnissen von beispielsweise 1:3 bis 1:7, vorzugsweise 1:4 bis 1:6, z.B. das Umsetzungsprodukt von 1 Mol Borsäure mit 1 Mol Monoethanolamin hinzusetzt und damit erfindungsgemäß zu verwendende Intumeszenzträger erzeugt. Es war auch nicht zu erwarten, daß z.B. ein Komplex aus 1 Mol Aluminiumtrisphosphat und 3 Mol des Umsetzungsproduktes aus 1 Mol Borsäure und 1 Mol Ethanolamin ein wesentlich besseres Intumeszenzverhalten zeigt, als ein Umsetzungsprodukt aus 1 Mol Aluminiumtrisphosphat mit 3 Molen Ethanolamin.

Im folgenden wird die Erfindung beispielhaft erläutert. Die angegebenen Teile und Prozente beziehen sich auf das Gewicht, sofern nichts anderes angegeben ist.

### Beispiele

### Allgemeines:

Zur Kennzeichnung der Intumeszenzfähigkeit wurde in ein Reagenzglas mit einem Durchmesser von 12 mm 1 g des jeweiligen gepulverten Intumeszenzträgers eingebracht. Dann wurde das Reagenzglas in einen auf 400°C vorgeheizten Heizschrank gestellt und nach 30 Minuten entnommen. Dann wurde die Steighöhe des gebildeten Intumeszenzschaumes in cm gemessen und der so erhaltene Meßwert direkt als Intumeszenzwert angegeben.

### Vergleichsbeispiel

Durch Auflösen von 1 Mol Al(OH)₃ in konz. H₃PO₄ (3 Mol) bei 100°C wurde in 60 %iger wäßriger Lösung eine klare Lösung von Al(H₂PO₄)₃ hergestellt. Diese wurde mit 3 Mol Monoethanolamin umgesetzt und die erhaltene klare Lösung (pH 6,1) bei 80°C bis zur Gewichtskonstanz getrocknet. Das so erhaltene Material hatte einen Intumeszenzwert von 1,8. Der gebildete Intumeszenzschaum war grobporig und wenig homogen.

### Beispiel 1

Es wurde wie beim Vergleichsbeispiel gearbeitet. Vor dem Trocknen wurden jedoch noch 3 Mol H₃BO₃ zugesetzt und bei 80°C aufgelöst. Man erhielt eine Lösung mit einem pH-Wert von 6,8 die nunmehr bei 80°C zur Gewichtskonstanz getrocknet wurde.

Das erhaltene Material ließ sich gut pulvern und hatte einen Intumeszenzwert von 5,5. Der gebildete Intumeszenzschaum war feinporig und sehr homogen.

Dieses Beispiel verdeutlicht die erheblich verbesserten Intumeszenzeigenschaften erfindungsgemäß zu verwendender Intumeszenzträger.

### Beispiel 2

Es wurde wie bei Beispiel 1 gearbeitet, jedoch wurde anstelle von 3 Mol Ethanolamin ein Gemisch aus 2 Mol Diisopropanolamin und 1 Mol Ammoniak verwendet. Der Intumeszenzwert des erhaltenen Materials betrug 3,5. Der Intumeszenzschaum war homogen und feinporig.

### Beispiel 3

Es wurde wie bei Beispiel 1 gearbeitet, anstelle von Monoethanolamin wurde jedoch 1 Mol Triethanolamin im Gemisch mit 1 Mol Diethanolamin und 1 Mol Monoethanolamin eingesetzt. Der Intumeszenzwert des erhaltenen Materials war 3,1. Der Intumeszenzschaum war relativ grobporig.

### Beispiel 4

Jeweils getrennt wurde eine 70 %ige wäßrige Lösung von Al(H₂PO₄)₃ und eine 70 %ige Lösung des Umsetzungsproduktes aus 1 Mol H₃BO₃ und 1 Mol Ethanolamin hergestellt. Dann wurden beide Lösungen bei 60°C vereinigt und solange gerührt bis sich eine klare Lösung gebildet hatte. Die Mischung der Lösungen wurde mit verschiedenen Molverhältnissen Al:B vorgenommen. Abschließend wurde jeweils bei 80°C bis zur Gewichtskonstanz getrocknet und der Intumeszenzwert bestimmt.

| Molverhältnis Al:B | 1:2 | 1:2,5 | 1:3 | 1:3,5 | 1:4 | 1:4,5 | 1:5 | 1:6 |
|---|---|---|---|---|---|---|---|---|
| Intumeszenzwert | 2,0 | 3,5 | 5,5 | 6,0 | 6,1 | 6,0 | 5,3 | 5,0 |

Die gefundenen Intumeszenzwerte zeigen die Möglichkeit, die Intumeszenzeigenschaften durch das Verhältnis Al:B einstellen zu können.

### Beispiel 5

Durch Umsetzung einer 70 %igen wäßrigen Lösung des Komplexes H₃BO₃ . H₂NC₂H₄OH mit einer 70 %igen wäßrigen Lösung von (theor. Formel) (HO)Al(H₂PO₄)₂ im Molverhältnis 4:1 bei 80°C und Eindampfen bei 80°C wurde ein Material mit dem Intumeszenzwert von 3,5 erhalten.

### Beispiel 6

Es wurde eine 70 %ige Lösung von Al(H₂PO₄)₃ in Wasser hergestellt (Lösung 1) und eine 50 %ige Lösung von H₃BO₃ . H₂NC₂H₄OH in Wasser, (Lösung 2).

Dann wurde eine 50 %ige Lösung von Acrylamid in Wasser (Gelbildner) hergestellt (Lösung 3) und eine 25 %ige wäßrige Ammoniumpersulfatlösung (Lösung 4 - Initiator).

Unter N₂-Atmosphäre wurden 600 Teile Lösung 1 mit 1400 Teilen Lösung 2 gemischt. Es entstand eine niedrigviskose klare Lösung in einer leicht exothermen Reaktion. Nach Abkühlung auf 18°C wurden 240 Teile Lösung 3 hinzugerührt (unter N₂) und dann 1 Teil Lösung 4. Man erhielt eine klare Mischung, die sofort durch ein Druckfilter reinfiltriert (N₂) und dann in einen Floatglas-Dreischeibenverbund gefüllt wurde, wobei auf Luftausschluß geachtet wurde. Der Dreischeibenverbund bestand dann aus drei Floatglasscheiben mit je 3 mm Dicke und zwei mit der Mischung ausgefüllten Zwischenräumen von ebenfalls je 3 mm Dicke. Der Scheibenverbund war mit Silikon-Fugenmasse rundum verschlossen. Die unter Luftausschluß in den Scheibenverbund eingebrachte Mischung polymerisierte bei 15°C innerhalb von 20 Stunden unter Ausbildung eines zähen Gels, auch ohne Aktivierung durch Wärmezufuhr oder Bestrahlung. Der Scheibenverbund behielt auch noch nach 100 Stunden Lagerung bei 80°C seine Klarheit und bei einer Beflammung erfolgte kein Fließen oder Schmelzen des Gels.

Ein derartig gefüllter Scheibenverbund von 50 x 50 cm Flächenmaß wurde in Anlehnung an DIN 4102 in einem Kleinbrandofen nach der Einheitstemperaturkurve beflammt. Nach 30 Minuten betrug der Durchschnittswert einer IR-Photometrischen 5-Punktmessung der Oberflächentemperatur noch weniger als 160°C (auf der feuerabgewandten Scheibenverbundfläche). Der Raumabschluß des Verbundes blieb über 90 Minuten erhalten.

## Patentansprüche

1. Verwendung von Intumeszenzträgern auf der Basis von Aluminium-Phosphat-Salzen für Brandschutzgläser, dadurch gekennzeichnet, daß es sich bei den Intusmenszenzträgern um Umsetzungsprodukte handelt aus
1 Mol einer Aluminiumverbindung mit
2 bis 5 Molen einer Phosphor enthaltenden Säure,
2 bis 9 Molen einer Bor enthaltenden Säure und
2 bis 9 Molen eines Alkanolamins,
die gegebenenfalls bis zu 36 Mol Wasser pro Mol eingesetzter Aluminiumverbindung enthalten.

2. Verwendung nach Anspruch 1, dadurch gekennzeichnet, daß es sich um Umsetzungsprodukte handelt aus
1 Mol Aluminiumhydroxid mit
3 Molen Orthophosphorsäure,
3 bis 7 Molen Orthoborsäure und
3 bis 7 Molen Monoethanolamin.

3. Verwendung nach Ansprüchen 1 und 2, dadurch gekennzeichnet, daß die Umsetzungsprodukte bei bis zu 150°C getrocknet wurden (bei Normaldruck).

4. Verwendung nach Ansprüchen 1 bis 3, dadurch gekennzeichnet, daß man aus erfindungsgemäß zu verwendenden Intumeszenzträgern wäßrige Gele durch Mischung mit gelbbildenden Zusätzen und Wasser herstellt und zur Füllung oder Beschichtung von Verbundglaskonstruktionen für Brandschutzzwecke verwendet.

## Claims

1. Use of intumescence carriers based on aluminium phosphate salts for fireproof glass, characterised in that the intumescence carriers are reaction products of
1 mol of an aluminium compound with
2 to 5 mol of a phosphorus-containing acid,
2 to 9 mol of a boron-containing acid and
2 to 9 mol of an alkanolamine,
and which optionally contain up to 36 mol of water per mole of aluminium compound employed.

2. Use according to Claim 1, characterised in that they are reaction products of
1 mol of aluminium hydroxide with
3 mol of orthophosphoric acid,
3 to 7 mol of orthoboric acid and
3 to 7 mol of monoethanolamine.

3. Use according to Claims 1 and 2, characterised in that the reaction products were dried at up to 150°C (under normal pressure).

4. Use according to Claims 1 to 3, characterised in that aqueous gels are produced from intumescence carriers to be used according to the invention, by mixing with gel-forming additives and water, and are used for filling or coating laminated glass constructions for fire protection purposes.

## Revendications

1. Utilisation de porteurs intumescents à base de sels d'aluminium-phosphate pour des vertes ignifuges, caractérisée en ce qu'il s'agit pour les porteurs intumescents de produits de réaction de
1 mol d'un composé d'aluminium avec
2 à 5 mol d'un acide contenant du phosphore,
2 à 9 mol d'un acide contenant du bore et
2 à 9 mol d'un amino-alcool,
qui contiennent éventuellement jusqu'à 36 mol d'eau par mole de composés d'aluminium utilisé.

2. Utilisation selon la revendication 1, caractérisée en ce qu'il s'agit de produits de réaction de
1 mol d'hydroxyde d'aluminium avec
3 mol d'acide orthophosphorique,
3 à 7 mol d'acide orthoborique et
3 à 7 mol de monoéthanolamine.

3. Utilisation selon les revendications 1 et 2, caractérisée en ce qu'on sèche les produits de réaction à une température allant jusqu'à 150°C (à pression atmosphérique).

4. Utilisation selon les revendications 1 à 3, caractérisée en ce qu'on prépare à partir des porteurs intumescents à utiliser selon l'invention des gels aqueux par mélange avec des additifs formateurs de gel et de l'eau et qu'on les utilise pour un remplissage ou un revêtement de constructions en verte de sécurité feuilleté à des fins ignifuges.
